# FASCICULE DE BREVET EUROPEEN

(11) **EP 3 977 013 B1**
(45) Date de publication et mention de la délivrance du brevet: **26.06.2024**
(21) Numéro de dépôt: 20726856.6
(22) Date de dépôt: 25.05.2020
(51) Int. Cl.: F23R 3/32

(54) **ENSEMBLE DE COMBUSTION MUNI D'UNE CANNE DE PRÉVAPORISATION**
VERBRENNUNGSANORDNUNG MIT EINEM VORVERDAMPFUNGSROHR
COMBUSTION ASSEMBLY WITH A PRE-VAPORIZING PIPE

(30) Priorité: 28.05.2019 FR 1905637
(43) Date de publication de la demande: 06.04.2022
(73) Titulaire: Safran Helicopter Engines, 64510 Bordes (FR)
(72) Inventeur: SAVARY, Nicolas Roland Guy, 77550 MOISSY-CRAMAYEL (FR); BERAT, Claude Marie Michel, 77550 MOISSY-CRAMAYEL (FR); LAMAISON, Olivier, 77550 MOISSY-CRAMAYEL (FR); LAMEIGNERE, Yvan Ludovic, 77550 MOISSY-CRAMAYEL (FR); VERDIER, Hubert Pascal, 77550 MOISSY-CRAMAYEL (FR); VIGUIER, Chritophe Nicolas Henri, 77550 MOISSY-CRAMAYEL (FR)
(74) Mandataire: Regimbeau
(86) Numéro de dépôt international: PCT/EP2020/064456
(87) Numéro de publication internationale: WO 2020/239702

(56) Documents cités:
- WO-A1-2015/054140
- WO-A1-2015/079166
- CN-A- 108 397 790
- FR-A- 1 104 809
- GB-A- 824 306
- US-A- 3 820 324

## Description

L'invention concerne une canne de prévaporisation pour une chambre de combustion de turbomachine, une chambre de combustion munie de cette canne de vaporisation et une turbomachine munie de cette chambre de combustion.

La canne est habituellement fixée à un carter pour pénétrer dans la chambre de combustion via une ouverture de celle-ci.

De telles cannes sont connues par exemple par les documents FR-A-3 066 009 et WO 2015/079166.

La canne de prévaporisation connue par le document FR-A-3 066 009 comporte un corps principal de forme générale allongée et définissant un premier conduit longitudinal interne dans lequel est destiné à être monté un injecteur de carburant, ledit corps principal comportant une première extrémité longitudinale de fixation à une paroi de chambre et une seconde extrémité longitudinale, et deux bras coudés disposés au niveau de la seconde extrémité longitudinale et définissant des embouts coudés dont des premières extrémités sont en communication fluidique avec ledit premier conduit et dont des secondes extrémités sont destinées à déboucher dans la chambre.

L'inconvénient de cette canne est que les bras coudés génèrent un encombrement latéral rendant plus difficile de retirer la canne en la faisant passer par l'ouverture de la chambre.

Le document WO 2015/079166 décrit une canne de prévaporisation selon la figure 1, qui comporte une paroi tubulaire 61 formant un conduit 32 s'étendant à l'intérieur de la chambre 10 de combustion, et débouchant dans celle-ci par deux embouts 33 reliés à des endroits différents de la longueur de la paroi 61 situés à distance d'un injecteur de carburant inséré dans une extrémité du conduit. Cette canne, du fait que les embouts sont en série, permet de plus facilement faire coulisser la canne dans l'ouverture de la chambre pour la retirer.

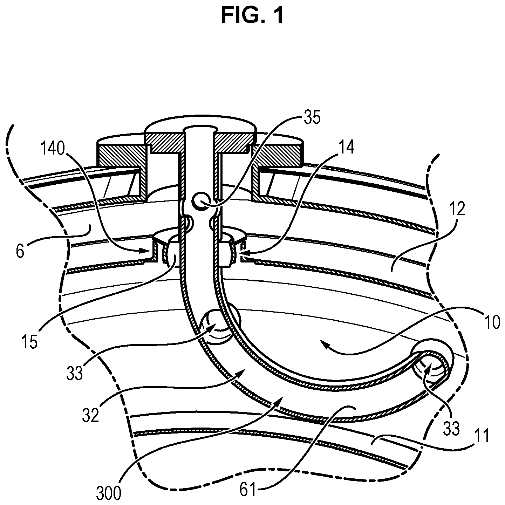

En revanche, les écoulements de carburant expulsés par les deux embouts selon la figure 1 sont trop dissymétriques, ce qui fait que les combustions dans la chambre à la sortie des deux embouts le sont également.

L'invention vise à obtenir une canne de prévaporisation pour une chambre de combustion de turbomachine, qui à la fois soit facilement démontable par coulissement hors de l'ouverture de la chambre de combustion et permette de mieux contrôler les écoulements de carburant des embouts.

A cet effet, un premier objet de l'invention est un ensemble de combustion de turbomachine suivant la revendication 1.

Grâce à l'invention, l'agencement du premier canal peut être déterminé indépendamment de l'agencement du deuxième canal, pour pouvoir créer dans les premier et deuxième embouts respectivement deux premier et deuxième écoulements de carburant ayant des caractéristiques davantage similaires les unes aux autres.

Suivant un mode de réalisation de l'invention, la surface extérieure du corps comporte un bras principal s'étendant globalement suivant une première direction longitudinale et un bras latéral raccordé au bras principal et s'écartant d'une manière courbe suivant une deuxième direction, qui est latérale par rapport à la première direction longitudinale, le bras principal relie la partie d'extrémité au premier embout de sortie de carburant, et le deuxième embout de sortie de carburant est situé dans le bras latéral, à distance du bras principal et à distance du premier embout de sortie de carburant.

Suivant un mode de réalisation de l'invention, le premier embout de sortie de carburant et le deuxième embout de sortie de carburant sont orientés dans le même sens d'une même troisième direction de sortie de carburant

Suivant un mode de réalisation de l'invention, la première longueur est prise le long de la ligne la plus courte de la surface extérieure allant de la partie d'extrémité à une première partie centrale du premier embout de sortie de carburant, la deuxième longueur est prise le long de la ligne la plus courte de la surface extérieure allant de la première partie centrale du premier embout de sortie de carburant à une deuxième partie centrale du deuxième embout de sortie de carburant.

Suivant un mode de réalisation de l'invention, le premier canal a une première longueur intérieure de passage de carburant, qui est supérieure à la première longueur.

Suivant un mode de réalisation de l'invention, la première longueur intérieure de passage de carburant du premier canal est prise selon une ligne, qui est centrale par rapport à une première surface intérieure du corps principal délimitant le premier canal.

Suivant un mode de réalisation de l'invention, une première partie de la première longueur intérieure de passage de carburant du premier canal est située à l'intérieur de la deuxième longueur de la surface extérieure du corps principal.

Suivant un mode de réalisation de l'invention, le premier canal comporte une deuxième partie, qui est coudée par rapport à une troisième partie du premier canal, reliée à la deuxième partie du premier canal.

Suivant un mode de réalisation de l'invention, le premier canal comporte au moins un coude situé à l'intérieur de la deuxième longueur de la surface extérieure du corps principal et entre la troisième partie du premier canal et la deuxième partie du premier canal.

Suivant un mode de réalisation de l'invention, le premier canal jouxte une partie du deuxième canal à l'intérieur du corps principal sur la première longueur et sur une quatrième partie de la deuxième longueur.

Suivant un mode de réalisation de l'invention, le premier canal, le premier embout de sortie de carburant, le deuxième canal et le deuxième embout de sortie de carburant sont délimités par au moins une paroi intérieure du corps principal et par la surface extérieure du corps principal, la surface extérieure étant d'une seule pièce avec la au moins une paroi intérieure.

Suivant un mode de réalisation de l'invention, le corps principal est une pièce réalisée par fabrication additive.

Suivant un mode de réalisation de l'invention, la canne de prévaporisation comporte en outre des moyens d'introduction d'air dans le conduit d'entrée.

Suivant un mode de réalisation de l'invention, le premier canal est délimité par une première surface intérieure du corps principal, le deuxième canal est délimité par une deuxième surface intérieure du corps principal, la première surface intérieure du corps principal a une première aire qui est égale à moins de 10 % près à une deuxième aire de la deuxième surface intérieure du corps principal.

Un deuxième objet de l'invention est une turbomachine comportant un ensemble de combustion tel que décrit ci-dessus.

L'invention sera mieux comprise à la lecture de la description qui va suivre, donnée uniquement à titre d'exemple non limitatif en référence aux figures des dessins annexés.
[Fig. 1] représente schématiquement un exemple de canne de prévaporisation suivant le document WO 2015/079166.
[Fig. 2] représente schématiquement en coupe longitudinale une canne de prévaporisation suivant un mode de réalisation de l'invention.
[Fig. 3] représente schématiquement en perspective un ensemble de combustion, dans lequel peut être utilisée la canne de prévaporisation suivant l'invention.
[Fig. 4] représente schématiquement en coupe partielle un ensemble de combustion, dans lequel peut être utilisée la canne de prévaporisation suivant l'invention et où elle a été partiellement représentée.
[Fig. 5] représente schématiquement en vue de l'intérieur une canne de prévaporisation suivant un autre mode de réalisation de l'invention.

La canne 5 de prévaporisation et l'ensemble de combustion 1 suivant l'invention peuvent être montés sur une turbomachine.

En référence aux figures 1, 3 et 4, l'ensemble 1 de combustion comprend un carter 20, dans lequel est disposée la chambre 10 de combustion. La chambre 10 de combustion peut comprendre par exemple deux parois de révolution respectivement interne 11 et externe 12 s'étendant l'une à l'intérieur de l'autre, et reliées par une paroi annulaire 13 de fond de chambre 10. Le carter 20 peut comprendre également une paroi externe de révolution 22, dite virole externe, s'étendant autour de la chambre 10 de combustion, et à laquelle est fixée la paroi externe 12 de celle-ci.

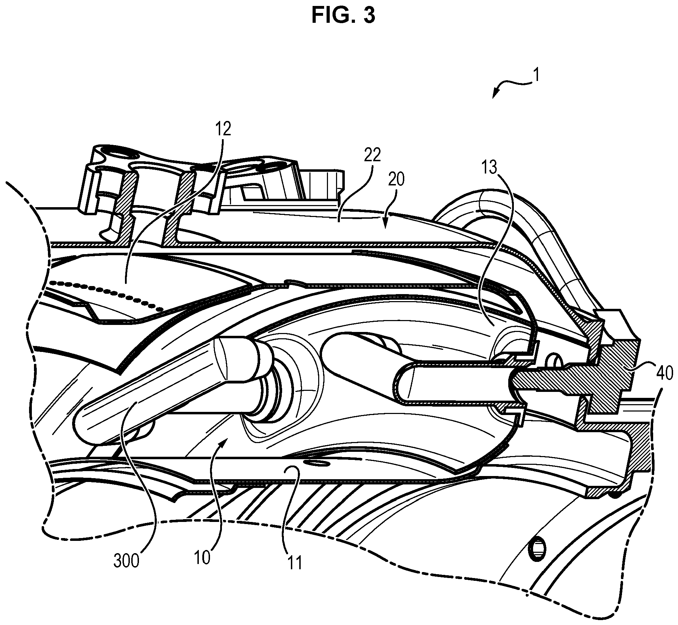

L'ensemble 1 de combustion comprend en outre une ou plusieurs cannes 5 de prévaporisation. Des exemples de cannes de vaporisation 300 suivant le document WO 2015/079166 sont représentés aux figures 1 et 3.

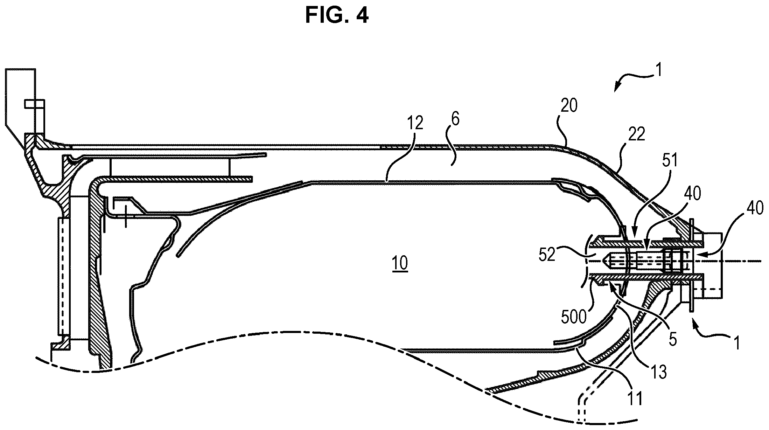

Une ou plusieurs cannes 5 de vaporisation suivant l'invention peut être montée dans l'ensemble 1 de combustion des figures 3 et 4, où elles n'y sont pas représentées. La ou les cannes 5 de prévaporisation sont montées sur le carter 20 et/ou sur une paroi de la chambre 10 de combustion. La ou les cannes 5 de vaporisation suivant l'invention sont démontables. La canne de prévaporisation est elle-même fixée à la chambre 10 de combustion, au niveau de la paroi externe ou de la paroi de fond de chambre de celle-ci, et pénètre dans la chambre 10 de combustion au travers d'une ouverture 14 pratiquée dans la paroi.

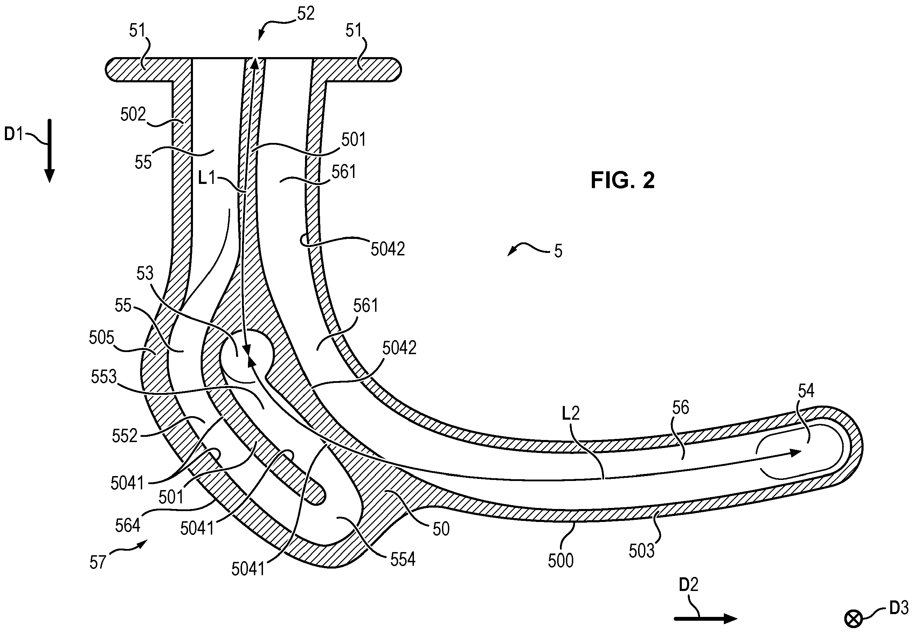

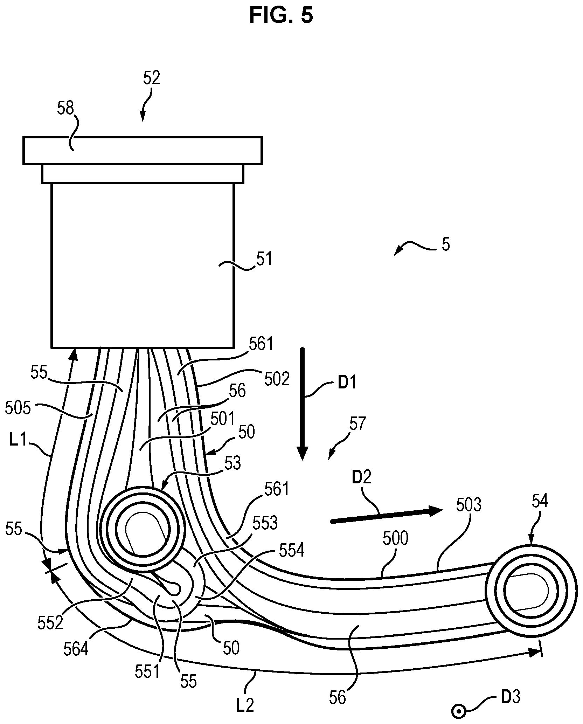

Aux figures 2 et 5, la canne de prévaporisation 5 suivant l'invention comporte un corps principal 50 s'étendant d'une manière courbe en longueur. Le corps principal 50 comporte une première partie 51 d'extrémité délimitant un conduit 52 d'entrée dans lequel est destiné à être monté un injecteur de carburant 40, ainsi que représenté à la figure 4, pour l'envoi de carburant dans la canne 5. La partie 51 d'extrémité peut être par exemple rectiligne en longueur. De l'air entre également par le conduit 52.

La première partie 51 d'extrémité est reliée à une section 57 d'acheminement de fluide décrite ci-dessous, pour envoyer du carburant. La section 57 d'acheminement de fluide du corps principal 50 de la canne 5 peut être par exemple courbe en longueur. La surface extérieure 500 du corps 50 de la canne 5 comporte un bras principal 502 s'étendant globalement suivant (et/ou autour) une première direction D1 longitudinale et un bras latéral 503 raccordé au bras principal 502 et s'écartant d'une manière courbe suivant une deuxième direction latérale D2 (pouvant par exemple être vers la droite aux figures 2 et 5) de la première direction D1 longitudinale. Le bras latéral 503 est coudé par rapport au bras principal 502. La deuxième direction latérale D2 peut être perpendiculaire à la première direction D1 longitudinale. Dans d'autres modes de réalisation, la deuxième direction latérale D2 peut faire un angle inférieur à 90° ou supérieur à 90° par rapport à la première direction D1 longitudinale.

Suivant un mode de réalisation, le bras principal 502 relie la partie 51 d'extrémité au premier embout 53 de sortie de carburant, et le deuxième embout 54 de sortie de carburant est situé dans le bras latéral 503, à distance du bras principal 502 et à distance du premier embout 53 de sortie de carburant.

Suivant un mode de réalisation, le premier embout 53 de sortie de carburant, et le deuxième embout 54 de sortie de carburant sont orientés dans le même sens d'une même troisième direction D3 de sortie de carburant. Par exemple, aux figures 2 et 5, la troisième direction D3 de sortie de carburant est transversale ou perpendiculaire par rapport au bras principal 502 et/ou par rapport au bras latéral 503 et/ou par rapport à la première direction D1 longitudinale et/ou par rapport à la deuxième direction latérale D2.

La section 57 d'acheminement de fluide possède une paroi extérieure 505 ayant une surface extérieure 500. La surface extérieure 500 du corps principal 50 a une première longueur L1 non nulle allant de la partie 51 d'extrémité à un premier embout 53 de sortie de carburant. La surface extérieure 500 du corps principal 50 de la canne 5 possède une deuxième longueur L2 non nulle, qui prolonge la première longueur L1 à partir du premier embout 53 de sortie de carburant. La deuxième longueur L2 va du premier embout 53 de sortie de carburant à un deuxième embout 54 de sortie de carburant, distant du premier embout 53 de sortie de carburant.

Les longueurs sont curvilignes. La première longueur L1 peut être par exemple prise le long de la ligne la plus courte de la surface extérieure 500 allant de la partie 51 d'extrémité à une première partie centrale du premier embout 53 de sortie de carburant. La deuxième longueur L2 peut être par exemple prise le long de la ligne la plus courte de la surface extérieure 500 allant de la première partie centrale du premier embout 53 de sortie de carburant à une deuxième partie centrale du deuxième embout 54 de sortie de carburant. Aux figures 2 et 5, ces longueurs L1 et L2 sont représentées sur le côté extérieur de la canne 5 pour ne pas surcharger les figures.

La section 57 d'acheminement de fluide du corps principal 50 comporte un premier canal 55 reliant le conduit 52 d'entrée au premier embout 53 de sortie de carburant. Le premier canal 55 est creux pour l'envoi de carburant et d'air du conduit 52 d'entrée au premier embout 53. La section 57 d'acheminement de fluide du corps principal 50 comporte un deuxième canal 56, qui est distinct du premier canal 55 et qui relie le conduit 52 d'entrée au deuxième embout 54 de sortie de carburant. Le deuxième canal 56 est creux pour l'envoi de carburant et d'air du conduit 52 d'entrée au deuxième embout 54. Le premier canal 55 et le deuxième canal 56 ne communiquent entre eux que par le conduit 52 d'entrée, par exemple avec un plénum de celui-ci. Le premier canal 55 et le deuxième canal 56 sont délimités à l'intérieur du corps principal 50. Bien entendu, plus de deux canaux et plus de deux embouts peuvent être prévus. Le canal 55 et/ou 56 peut serpenter à l'intérieur du corps principal 50. Le premier canal 55 est ainsi un premier canal 55 d'envoi de carburant et d'air. Le premier embout 53 est ainsi un premier embout 53 de sortie de carburant et d'air. Le deuxième canal 56 est ainsi un deuxième 56 d'envoi de carburant et d'air. Le deuxième embout 54 est ainsi un deuxième embout 54 de sortie de carburant et d'air.

Grâce aux canaux 55 et 56, on parvient à mieux contrôler en sortie des premier et deuxième embouts respectivement deux premier et deuxième écoulements de carburant plus similaires l'un à l'autre, ce qui facilite leur intégration effective dans la turbomachine 2. En jouant sur les canaux 55 et 56, on peut ainsi parvenir à garantir le même fonctionnel, et en particulier la même vaporisation à la sortie des embouts 53 et 54 de la canne 5, et ainsi des embouts 53 et 54 iso-fonctionnels. On peut ainsi obtenir une meilleure symétrie de la vaporisation dans les embouts 53 et 54 et une meilleure homogénéité de la combustion dans la chambre 10. En particulier, l'invention peut obtenir une équivalence des embouts 53 et 54 vis-à-vis des performances de perméabilité à l'air, de temps de séjour, de surface mouillée, de débit à la sortie des embouts 53 et 54, de fraction de carburant évaporé à la sortie des embouts 53 et 54. L'invention peut ainsi réduire les écarts fonctionnels, limitant ainsi les risques et les coûts associés à une telle modification, qui par ailleurs permet des gains de maintenance importants. L'invention peut ainsi obtenir une équivalence de la combustion à la sortie des embouts 53 et 54.

Des caractéristiques d'agencement des canaux 55 et 56 sont décrites dans les modes de réalisation ci-dessous.

Suivant un mode de réalisation représenté aux figures 2 et 5, la paroi extérieure 505 est raccordée à une ou plusieurs parois intérieures 501, qui délimitent le premier canal 55 et le deuxième canal 56. Suivant un mode de réalisation représenté aux figures 2 et 5, la paroi extérieure 505 est d'une seule pièce avec la ou les parois intérieures 501.

Suivant un mode de réalisation représenté aux figures 2 et 5, le premier canal 55 est délimité par une première surface intérieure 5041 du corps principal 50. La première surface intérieure 5041 est portée en partie par la paroi extérieure 505 et en partie par la ou les parois intérieures 501.

Suivant un mode de réalisation représenté aux figures 2 et 5, le deuxième canal 55 est délimité par une deuxième surface intérieure 5042 du corps principal 50. La deuxième surface intérieure 5042 est portée en partie par la paroi extérieure 505 et en partie par la ou les parois intérieures 501.

Suivant un mode de réalisation représenté aux figures 2 et 5, le premier canal 55 a une première longueur intérieure de passage de carburant, qui est supérieure à la première longueur L1. Ainsi, le premier canal 55 peut être courbe autour de la première longueur L1 pour parcourir un plus grand chemin que celui de la surface extérieure 500 allant du bord du conduit 52 d'entrée au bord du premier embout 53. On parvient ainsi à mieux rapprocher la longueur et/ou le volume du premier canal 55 par rapport à la longueur et/ou au volume du deuxième canal 56, ce qui permet d'obtenir des écoulements de carburant davantage similaires dans les premier et deuxième embouts 53 et 54. La première longueur intérieure de passage de carburant du premier canal 55 peut être prise selon une ligne, qui est située dans le premier canal 55 et qui est entourée par la première surface intérieure 5041 du corps principal 50 délimitant le premier canal 55 ou est centrale par rapport à la première surface intérieure 5041 du corps principal 50 délimitant le premier canal 55.

La deuxième longueur intérieure de passage de carburant du deuxième canal 56 peut être prise selon une ligne, qui est située dans le deuxième canal 56 et qui est entourée par la deuxième surface intérieure 5042 du corps principal 50 délimitant le deuxième canal 56 ou est centrale par rapport à la deuxième surface intérieure 5042 du corps principal 50 délimitant le deuxième canal 56.

Suivant un mode de réalisation représenté aux figures 2 et 5, une première partie 551 de la première longueur intérieure de passage de carburant du premier canal 55 est située à l'intérieur de la deuxième longueur L2 de la surface extérieure 500 du corps principal 50. On allonge ainsi le premier canal 55, ce qui permet d'obtenir des écoulements de carburant davantage similaires dans les premier et deuxième embouts 53 et 54.

Suivant un mode de réalisation représenté aux figures 2 et 5, une deuxième partie 552 (de la première longueur intérieure de passage de carburant) du premier canal 55 est coudée ou repliée selon un ou plusieurs coudes 554 par rapport à une troisième partie 553 (de la première longueur intérieure de passage de carburant) du premier canal 55, la troisième partie 553 étant reliée à la deuxième partie 552. Le (ou les) coude 554 de premier canal entre la troisième partie 553 de premier canal et la deuxième partie 552 de premier canal peut être par exemple situé à l'intérieur de la deuxième longueur L2 de la surface extérieure 500 du corps principal 50, c'est-à-dire dans la première partie 551 de premier canal. On parvient ainsi à placer davantage de longueur intérieure du premier canal 55 dans un encombrement réduit. On parvient ainsi à davantage de symétrie entre les longueurs intérieures et volumes des canaux 55 et 56.

Suivant un mode de réalisation représenté aux figures 2 et 5, le premier canal 55 jouxte (c'est-à-dire se trouve à côté en en étant séparé par au moins une paroi intérieure 501 du corps principal 50) une partie 561 du deuxième canal 56 à l'intérieur du corps principal 50 sur la première longueur L1 et sur une quatrième partie 564 de la deuxième longueur L2.

Suivant un mode de réalisation représenté aux figures 2 et 5, le premier canal 55, le premier embout 53 de sortie de carburant, le deuxième canal 56 et le deuxième embout 54 de sortie de carburant sont délimités par une ou plusieurs parois intérieures 501 du corps principal 50 et par la surface extérieure 500 du corps principal 50. La surface extérieure 500 du corps principal 50 est d'une seule pièce avec la ou les parois intérieures 501 du corps principal 50. On obtient ainsi une largeur extérieure davantage réduite de la canne 5 tout en ayant des écoulements de carburant davantage similaires à la sortie des embouts 53 et 54 et un poids davantage réduit de la canne 5.

Suivant un mode de réalisation, la première aire de la première surface intérieure 5041 de passage de carburant du premier canal 55 est sensiblement égale, ou égale à moins de 10 % près, à la deuxième aire de la deuxième surface intérieure 5042 de passage de carburant du deuxième canal 56 et/ou le premier volume intérieur du premier canal 55 est sensiblement égal, ou égal à moins de 10 % près, au deuxième volume intérieur du deuxième canal 56 et/ou la première longueur intérieure de passage de carburant du premier canal 55 est sensiblement égale, ou égale à moins de 10 % près, à la deuxième longueur intérieure de passage de carburant du deuxième canal 56.

Suivant un mode de réalisation, la première caractéristique débit/pression du premier canal 55 est sensiblement égale, ou égale à moins de 10 % près, à la deuxième caractéristique débit/pression du deuxième canal 56.

Suivant un mode de réalisation représenté aux figures 2 et 5, le corps principal 50 est une pièce réalisée par fabrication additive. Cela permet de réaliser plus facilement les courbures intérieures des canaux.

Suivant un mode de réalisation représenté aux figures 2 et 5, la canne de prévaporisation 5 comporte des moyens d'introduction d'air dans le conduit 52 d'entrée. Ces moyens d'introduction d'air peuvent comporter dans le conduit 52 d'entrée un ou plusieurs orifices 35 et/ou des conduits 6, servant à l'introduction d'air, dont des exemples non limitatifs sont représentés aux figures 1 et 4.

Suivant un mode de réalisation, la première partie 51 d'extrémité de la (ou des) canne de prévaporisation 5 suivant l'invention est montée sur le carter 20. Dans cette position de montage, le corps principal 50 de la canne 5 pénètre dans la chambre 10 de combustion au travers d'une ouverture 14 présente dans une paroi de la chambre 10 de combustion. Dans cette position de montage, le premier embout 53 de sortie de carburant et le deuxième embout 54 de sortie de carburant sont situés dans la chambre 10 de combustion. Dans cette position de montage, un injecteur de carburant 40 est monté dans le conduit 52 d'entrée de chaque canne 5 de prévaporisation, comme visible sur la figure 4 (cet élément ayant été omis dans les figures 2 et 5). La première partie 51 d'extrémité peut être située à l'extérieur de la chambre 10 de combustion.

On décrit ci-dessous un mode de fonctionnement de l'ensemble 1 de combustion comportant la canne 5 de prévaporisation suivant l'invention.

L'injecteur de carburant 40 débouche dans le conduit 52 d'entrée pour y injecter du carburant. L'injecteur principal 40 injecte du carburant une fois que la combustion au sein de la chambre 10 a déjà été initiée par un autre type d'injecteur dit « injecteur de démarrage ». Le carburant est projeté par l'injecteur 40 dans le conduit 52 d'entrée de la canne 5, laquelle canne 5 est chauffée par la combustion ayant lieu dans la chambre 10 de combustion. Au contact des parois de la canne 5, le carburant se vaporise et se mélange avec de l'air provenant d'un ou plusieurs orifices 35 réalisés dans la paroi 31 de la canne, entre la virole externe 22 du carter 20 et la paroi externe 12 de la chambre de combustion. Un exemple de disposition d'orifices 35 traversant la paroi du conduit 52 d'entrée de la canne 5 a été représenté à la figure 1.

Le mélange air-carburant pénètre dans la chambre 10 de combustion par les embouts 53 et 54 de la canne 5 de prévaporisation. Le mélange carburant-air s'enflamme dans la chambre 10 de combustion lorsqu'il sort des embouts 53 et 54 de la canne 5. Les embouts 53 et 54 peuvent être orientés vers la paroi 13 de fond de la chambre 10, permettant une bonne combustion du carburant injecté.

Chaque canne 5 de prévaporisation peut être montée sur la virole externe 22 du carter 20, et pénètre à l'intérieur de la chambre de combustion 10 au travers de l'ouverture 14 pratiquée dans la paroi externe 12 de celle-ci. L'extrémité 58 de la partie 51 d'extrémité, éloignée de la section 57 d'acheminement de fluide de chaque canne 5 de prévaporisation peut être montée du coté externe de la virole externe 22 du carter 20. Pour démonter la canne 5 de prévaporisation, on peut la faire coulisser dans l'ouverture 14 pour l'en retirer. Ceci permet d'accéder à la canne 5 de prévaporisation, par exemple pour la réparer ou la remplacer, par l'extérieur du carter 20, sans avoir à démonter ce carter 20 ou la chambre 10 de combustion.

La canne 5 de prévaporisation 30 peut pénétrer à l'intérieur du carter 20 au moyen d'une autre ouverture 24 pratiquée dans sa virole externe 22, l'ouverture 24 étant de préférence en regard de l'ouverture 14 de la paroi de la chambre 10 de combustion, pour faciliter l'insertion et le retrait de la canne 5 de prévaporisation, dont le conduit 32 d'entrée s'étend généralement de manière rectiligne.

Chaque canne de prévaporisation 30 peut être montée d'une manière amovible sur le carter 20 et/ou sur la paroi de la chambre 10 de combustion, par exemple par boulonnage ou par vissage. Ainsi cela permet d'ôter facilement une canne pour la remplacer, la réparer ou la nettoyer.

L'ensemble de combustion 1 peut comprendre en outre une bague d'étanchéité 50, adaptée pour assurer l'étanchéité de la chambre 10 de combustion au niveau de l'ouverture 14 et permettant la traversée de la canne 5 de prévaporisation dans la chambre 10 de combustion. La bague 15 d'étanchéité peut être disposée entre un bord 140 de l'ouverture 14 et la surface extérieure 500 de la canne 5. La bague 15 assure l'étanchéité de la paroi 12, tout en autorisant celle-ci à se déformer par dilatation thermique lors du fonctionnement de la turbomachine 2.

Bien entendu, les modes de réalisation, caractéristiques, possibilités et exemples décrits ci-dessus peuvent être combinés l'un avec l'autre ou être sélectionnés indépendamment l'un de l'autre.

## Revendications

1. Ensemble (1) de combustion de turbomachine, comprenant :
- un carter (20),
- une chambre de combustion (10) de carburant, disposée dans le carter (20),
- au moins une canne de prévaporisation (5) pour la chambre de combustion (10) de turbomachine, la canne de prévaporisation (5) comportant un corps principal (50) de forme générale allongée, le corps principal (50) comportant une première partie (51) d'extrémité délimitant un conduit (52) d'entrée,
le corps principal (50) ayant une surface extérieure (500) ayant au moins une première longueur (L1) s'étendant de la partie (51) d'extrémité à au moins un premier embout (53) de sortie de carburant, et au moins une deuxième longueur (L2), qui prolonge la première longueur (L1) à partir du premier embout (53) de sortie de carburant et qui s'étend du premier embout (53) de sortie de carburant à au moins un deuxième embout (54) de sortie de carburant,
la première partie (51) d'extrémité étant montée sur le carter (20), le corps principal (50) pénétrant dans la chambre (10) de combustion au travers d'une ouverture (14) réalisée dans une paroi de la chambre de combustion, le premier embout (53) de sortie de carburant et le deuxième embout (54) de sortie de carburant étant situés dans la chambre de combustion,
l'ensemble (1) de combustion de turbomachine comportant un injecteur de carburant (40) monté dans le conduit (52) d'entrée de la canne de prévaporisation (5), et étant **caractérisé en ce qu'**à l'intérieur du corps principal (50) se trouve au moins un premier canal (55) reliant le conduit (52) d'entrée au premier embout (53) de sortie de carburant et au moins un deuxième canal (56), qui est distinct du premier canal (55) et qui relie le conduit (52) d'entrée au deuxième embout (54) de sortie de carburant.

2. Ensemble (1) de combustion de turbomachine suivant la revendication 1, dans lequel la surface extérieure (500) du corps (50) comporte un bras principal (502) s'étendant globalement suivant une première direction (D1) longitudinale et un bras latéral (503) raccordé au bras principal (502) et s'écartant d'une manière courbe suivant une deuxième direction (D2), qui est latérale par rapport à la première direction (D1) longitudinale,
le bras principal (502) relie la partie (51) d'extrémité au premier embout (53) de sortie de carburant, et
le deuxième embout (54) de sortie de carburant est situé dans le bras latéral (503), à distance du bras principal (502) et à distance du premier embout (53) de sortie de carburant.

3. Ensemble (1) de combustion de turbomachine suivant l'une quelconque des revendications précédentes, dans lequel le premier embout (53) de sortie de carburant et le deuxième embout (54) de sortie de carburant sont orientés dans le même sens d'une même troisième direction (D3) de sortie de carburant

4. Ensemble (1) de combustion de turbomachine suivant l'une quelconque des revendications précédentes, dans lequel le premier canal (55) a une première longueur intérieure de passage de carburant, qui est supérieure à la première longueur (L1).

5. Ensemble (1) de combustion de turbomachine suivant l'une quelconque des revendications précédentes, **caractérisée en ce qu'**une première partie (551) d'une première longueur intérieure de passage de carburant du premier canal (55) est située à l'intérieur de la deuxième longueur (L2) de la surface extérieure (500) du corps principal (50).

6. Ensemble (1) de combustion de turbomachine suivant l'une quelconque des revendications précédentes, dans lequel le premier canal (55) comporte une deuxième partie (552), qui est coudée par rapport à une troisième partie (553) du premier canal (55), reliée à la deuxième partie (552) du premier canal.

7. Ensemble (1) de combustion de turbomachine suivant la revendication 6, dans lequel le premier canal (55) comporte au moins un coude (554) situé à l'intérieur de la deuxième longueur (L2) de la surface extérieure (500) du corps principal (50) et entre la troisième partie (553) du premier canal et la deuxième partie (552) du premier canal.

8. Ensemble (1) de combustion de turbomachine suivant l'une quelconque des revendications précédentes, dans lequel le premier canal (55) jouxte une partie (561) du deuxième canal (56) à l'intérieur du corps principal (50) sur la première longueur (L1) et sur une quatrième partie (564) de la deuxième longueur (L2).

9. Ensemble (1) de combustion de turbomachine suivant l'une quelconque des revendications précédentes, dans lequel le premier canal (55), le premier embout (53) de sortie de carburant, le deuxième canal (56) et le deuxième embout (54) de sortie de carburant sont délimités par au moins une paroi intérieure (501) du corps principal (50) et par la surface extérieure (500) du corps principal (50), la surface extérieure (500) étant d'une seule pièce avec la au moins une paroi intérieure (501).

10. Ensemble (1) de combustion de turbomachine suivant l'une quelconque des revendications précédentes, dans lequel le corps principal (50) est une pièce réalisée par fabrication additive.

11. Ensemble (1) de combustion de turbomachine suivant l'une quelconque des revendications précédentes, dans lequel la canne de prévaporisation (5) comporte en outre des moyens d'introduction d'air dans le conduit (52) d'entrée.

12. Ensemble (1) de combustion de turbomachine suivant l'une quelconque des revendications précédentes, dans lequel le premier canal (55) est délimité par une première surface intérieure (5041) du corps principal (50), le deuxième canal (56) est délimité par une deuxième surface intérieure (5042) du corps principal (50),
la première surface intérieure (5041) du corps principal (50) a une première aire qui est égale à moins de 10 % près à une deuxième aire de la deuxième surface intérieure (5042) du corps principal (50).

13. Turbomachine comportant un ensemble (1) de combustion suivant l'une quelconque des revendications précédentes.

## Patentansprüche

1. Verbrennungsanordnung (1) einer Turbomaschine, umfassend:
- ein Gehäuse (20),
- eine Brennkammer (10) für Treibstoff, die in dem Gehäuse (20) angeordnet ist,
- mindestens ein Vorverdampfungsrohr (5) für die Brennkammer (10) der Turbomaschine, wobei das Vorverdampfungsrohr (5) einen allgemein länglichen Hauptkörper (50) aufweist, wobei der Hauptkörper (50) einen ersten Endteil (51) aufweist, der eine Eingangsleitung (52) begrenzt,
wobei der Hauptkörper (50) eine äußere Oberfläche (500) hat, die mindestens eine erste Länge (L1) hat, die sich von dem Endteil (51) zu mindestens einer ersten Treibstoffausgangsspitze (53) erstreckt, und mindestens eine zweite Länge (L2), die die erste Länge (L1) ab der ersten Treibstoffausgangsspitze (53) verlängert und die sich von der ersten Treibstoffausgangsspitze (53) zu mindestens einer zweiten Treibstoffausgangsspitze (54) erstreckt,
wobei der erste Endteil (51) auf dem Gehäuse (20) angebracht ist, wobei der Hauptkörper (50) in die Brennkammer (10) durch eine Öffnung (14) eindringt, die in einer Wand der Brennkammer ausgebildet ist, wobei sich die erste Treibstoffausgangsspitze (53) und die zweite Treibstoffausgangsspitze (54) in der Brennkammer befinden,
wobei die Verbrennungsanordnung (1) der Turbomaschine eine Treibstoffeinspritzung (40) aufweist, die in der Eingangsleitung (52) des Vorverdampfungsrohrs (5) angebracht ist und **dadurch gekennzeichnet ist, dass** sich im Inneren des Hauptkörpers (50) mindestens ein erster Kanal (55) befindet, der die Eingangsleitung (52) mit der ersten Treibstoffausgangsspitze (53) verbindet und mindestens ein zweiter Kanal (56), der von dem ersten Kanal (55) verschieden ist und der die Eingangsleitung (52) mit der zweiten Treibstoffausgangsspitze (54) verbindet.

2. Verbrennungsanordnung (1) einer Turbomaschine nach Anspruch 1, wobei die äußere Oberfläche (500) des Körpers (50) einen Hauptarm (502) aufweist, der sich allgemein in einer ersten Längsrichtung (D1) erstreckt, und einen Seitenarm (503), der mit dem Hauptarm (502) verbunden ist und sich kurvenförmig in einer zweiten Richtung (D2) abspreizt, die im Verhältnis zur ersten Längsrichtung (D1) seitlich ist,
wobei der Hauptarm (502) den Endteil (51) mit der ersten Treibstoffausgangsspitze (53) verbindet, und
sich die zweite Treibstoffausgangsspitze (54) im Seitenarm (503) vom Hauptarm (502) beabstandet und von der ersten Treibstoffausgangsspitze (53) beabstandet befindet.

3. Verbrennungsanordnung (1) einer Turbomaschine nach einem beliebigen der vorangehenden Ansprüche, wobei die erste Treibstoffausgangsspitze (53) und die zweite Treibstoffausgangsspitze (54) im selben Sinn einer selben dritten Treibstoffausgangsrichtung (D3) ausgerichtet sind.

4. Verbrennungsanordnung (1) einer Turbomaschine nach einem beliebigen der vorangehenden Ansprüche, wobei der erste Kanal (55) eine erste innere Treibstoffdurchgangslänge hat, die größer als die erste Länge (L1) ist.

5. Verbrennungsanordnung (1) einer Turbomaschine nach einem beliebigen der vorangehenden Ansprüche, **dadurch gekennzeichnet, dass** sich ein erster Teil (551) einer ersten inneren Treibstoffdurchgangslänge des ersten Kanals (55) im Inneren der zweiten Länge (L2) der äußeren Oberfläche (500) des Hauptkörpers (50) befindet.

6. Verbrennungsanordnung (1) einer Turbomaschine nach einem beliebigen der vorangehenden Ansprüche, wobei der erste Kanal (55) einen zweiten Teil (552) aufweist, der im Verhältnis zu einem dritten Teil (553) des ersten Kanals (55) abgewinkelt ist, der mit dem zweiten Teil (552) des ersten Kanals verbunden ist.

7. Verbrennungsanordnung (1) einer Turbomaschine nach Anspruch 6, wobei der erste Kanal (55) mindestens ein Knie (554) aufweist, das sich im Inneren der zweiten Länge (L2) der äußeren Oberfläche (500) des Hauptkörpers (50) und zwischen dem dritten Teil (553) des ersten Kanals und dem zweiten Teil (552) des ersten Kanals befindet.

8. Verbrennungsanordnung (1) einer Turbomaschine nach einem beliebigen der vorangehenden Ansprüche, wobei der erste Kanal (55) an einen Teil (561) des zweiten Kanals (56) im Inneren des Hauptkörpers (50) auf der ersten Länge (L1) und auf einem vierten Teil (564) der zweiten Länge (L2) angrenzt.

9. Verbrennungsanordnung (1) einer Turbomaschine nach einem beliebigen der vorangehenden Ansprüche, wobei der erste Kanal (55), die erste Treibstoffausgangsspitze (53), der zweite Kanal (56) und die zweite Treibstoffausgangsspitze (54) von mindestens einer inneren Wand (501) des Hauptkörpers (50) und von der äußeren Oberfläche (500) des Hauptkörpers (50) begrenzt sind, wobei die äußere Oberfläche (500) mit der mindestens einen inneren Wand (501) aus einem einzigen Stück ist.

10. Verbrennungsanordnung (1) einer Turbomaschine (5) nach einem beliebigen der vorangehenden Ansprüche, wobei der Hauptkörper (50) ein durch additive Fertigung hergestelltes Teil ist.

11. Verbrennungsanordnung (1) einer Turbomaschine nach einem beliebigen der vorangehenden Ansprüche, wobei das Vorverdampfungsrohr (5) ferner Mittel zum Einleiten von Luft in die Eingangsleitung (52) aufweist.

12. Verbrennungsanordnung (1) einer Turbomaschine nach einem beliebigen der vorangehenden Ansprüche, wobei der erste Kanal (55) von einer ersten inneren Oberfläche (5041) des Hauptkörpers (50) begrenzt ist, der zweite Kanal (56) von einer zweiten inneren Oberfläche (5042) des Hauptkörpers (50) begrenzt ist,
wobei die erste innere Oberfläche (5041) des Hauptkörpers (50) einen ersten Bereich hat, der zirka mindestens 10% eines zweiten Bereichs der zweiten inneren Oberfläche (5042) des Hauptkörpers (50) entspricht.

13. Turbomaschine, die eine Verbrennungsanordnung (1) nach einem beliebigen der vorangehenden Ansprüche aufweist.

## Claims

1. A turbomachine combustion assembly (1), comprising
- a casing (20),
- a fuel combustion chamber (10) disposed in the casing (20),
- at least one pre-vaporization rod (5) fuel for the fuel combustion chamber (10), the pre-vaporization rod (5) comprising a main body (50) of generally elongated shape, the main body (50) comprising a first end portion (51) delimiting an inlet duct (52),
the main body (50) having an external surface (500) having at least a first length (L1) extending from the end portion (51) to at least a first fuel outlet end piece (53), and at least a second length (L2), which extends the first length (L1) from the first fuel outlet end piece (53) and which extends from the first fuel outlet end piece (53) to at least a second fuel outlet end piece (54),
wherein the first end portion (51) is mounted on the casing (20), wherein the main body (50) enters the combustion chamber (10) through an opening (14) made in a wall of the combustion chamber, wherein the first fuel outlet end piece (53) and the second fuel outlet end piece (54) are located in the combustion chamber,
the turbomachine combustion assembly (1) comprising a fuel injector (40) mounted in the inlet duct (52) of the pre-vaporization rod (5), and being **characterized in that** inside the main body (50) is at least a first channel (55) connecting the inlet duct (52) to the first fuel outlet end piece (53) and at least a second channel (56), which is separate from the first channel (55) and which connects the inlet duct (52) to the second fuel outlet end piece (54).

2. The turbomachine combustion assembly (1) according to claim 1, **characterized in that** the external surface (500) of the body (50) comprises a main arm (502) extending generally along a first longitudinal direction (D1) and a lateral arm (503) connected to the main arm (502) and deviating in a curved manner along a second direction (D2), which is lateral relative to the first longitudinal direction (D1),
the main arm (502) connects the end portion (51) to the first fuel outlet end piece (53), and
the second fuel outlet end piece (54) is located in the lateral arm (503), at a distance from the main arm (502) and at a distance from the first fuel outlet end piece (53).

3. The turbomachine combustion assembly (1) according to any one of the preceding claims, **characterized in that** the first fuel outlet end piece (53) and the second fuel outlet end piece (54) are oriented in the same orientation of a same third fuel outlet direction (D3).

4. The turbomachine combustion assembly (1) according to any one of the preceding claims, **characterized in that** the first channel (55) has a first internal fuel passage length which is greater than the first length (L1).

5. The turbomachine combustion assembly (1) according to any one of the preceding claims, **characterized in that** a first portion (551) of a first internal fuel passage length of the first channel (55) is located inside the second length (L2) of the external surface (500) of the main body (50).

6. The turbomachine combustion assembly (1) according to any one of the preceding claims, **characterized in that** the first channel (55) comprises a second portion (552), which is bent relative to a third portion (553) of the first channel (55), connected to the second portion (552) of the first channel.

7. The turbomachine combustion assembly (1) according to claim 6, **characterized in that** the first channel (55) comprises at least one bend (554) located inside the second length (L2) of the external surface (500) of the main body (50) and between the third portion (553) of the first channel and the second portion (552) of the first channel.

8. The turbomachine combustion assembly (1) according to any one of the preceding claims, **characterized in that** the first channel (55) adjoins a portion (561) of the second channel (56) inside the main body (50) on the first length (L1) and on a fourth portion (564) of the second length (L2).

9. The turbomachine combustion assembly (1) according to any one of the preceding claims, **characterized in that** the first channel (55), the first fuel outlet end piece (53), the second channel (56) and the second fuel outlet end piece (54) are delimited by at least one internal wall (501) of the main body (50) and by the external surface (500) of the main body (50), the external surface (500) being in one single piece with the at least one internal wall (501).

10. The turbomachine combustion assembly (1) according to any one of the preceding claims, **characterized in that** the main body (50) is a part made by additive manufacturing.

11. The turbomachine combustion assembly (1) according to any one of the preceding claims, **characterized in that** the pre-vaporization rod (5) further comprises means for introducing air into the inlet duct (52).

12. The turbomachine combustion assembly (1) according to any one of the preceding claims, **characterized in that** the first channel (55) is delimited by a first internal surface (5041) of the main body (50), the second channel (56) is delimited by a second internal surface (5042) of the main body (50),
the first internal surface (5041) of the main body (50) has a first area which is equal, by within less than 10%, to a second area of the second internal surface (5042) of the main body (50).

13. A turbomachine comprising a combustion assembly (1) according to any one of the preceding claims.
